(19) Europäisches Patentamt / European Patent Office / Office européen des brevets

(11) **EP 1 450 573 B1**

(12) **FASCICULE DE BREVET EUROPEEN**

(45) Date de publication et mention
de la délivrance du brevet:
**17.11.2010 Bulletin 2010/46**

(51) Int Cl.:
***H04W 24/10*** *(2009.01)*

(21) Numéro de dépôt: **04290366.6**

(22) Date de dépôt: **11.02.2004**

(54) **Procédé de contrôle d'un mode de compte rendu de mesures sur une interface radio et contrôleur de réseau radio pour la mise en oeuvre du procédé**

Verfahren zur Steuerung des Messberichtsmodus über eine Funkschnittstelle und Funknetzsteuerung zur Ausführung dieses Verfahrens

Method to control the measurement report mode on a radio interface and a radio network controller for performing such a method

(84) Etats contractants désignés:
**AT BE BG CH CY CZ DE DK EE ES FI FR GB GR HU IE IT LI LU MC NL PT RO SE SI SK TR**

(30) Priorité: **18.02.2003 FR 0301935**

(43) Date de publication de la demande:
**25.08.2004 Bulletin 2004/35**

(73) Titulaire: **Alcatel Lucent
75008 Paris (FR)**

(72) Inventeur: **Lucidarme, Thierry
78180 Montigny le Bretonneux (FR)**

(74) Mandataire: **Ameline, Jean-Paul B.C. et al
Alcatel-Lucent
Intellectual Property & Standards
54, rue La Boétie
75008 Paris (FR)**

(56) Documents cités:
**EP-A- 0 532 485     WO-A-01/63960
WO-A-99/43178     WO-A-03/005753**

- **HOLTZMAN J M: "Adaptive measurement intervals for handoffs" DISCOVERING A NEW WORLD OF COMMUNICATIONS. CHICAGO, JUNE 14 - 18, 1992. BOUND TOGETHER WITH B0190700, VOL. 3, PROCEEDINGS OF THE INTERNATIONAL CONFERENCE ON COMMUNICATIONS, NEW YORK, IEEE, US, vol. 4, 14 juin 1992 (1992-06-14), pages 1032-1036, XP010061954 ISBN: 0-7803-0599-X**
- **ETSI: "TS 125 331 Universal Mobile Telecommunications System (UMTS);RRC Protocol Specification (3G TS 25.331 Version 3.1.0 Release 1999)" ETSI TS 125 331 V3.1.0, XX, XX, janvier 2000 (2000-01), pages 1-282, XP002165164**

**EP 1 450 573 B1**

**Description**

La présente invention concerne les mesures effectuées dans les systèmes de radiocommunication avec les mobiles.

De telles mesures sont notamment utilisables dans des procédures de contrôle des liens radio qui servent de façon générale à optimiser la qualité des transmissions et à minimiser les interférences entre utilisateurs. Parmi ces procédures, on peut citer la régulation de la puissance d'émission par les mobiles et/ou par l'infrastructure, le contrôle des transferts automatiques de cellule (« handover ») dans les réseaux cellulaires, l'adaptation du codage de canal aux conditions de propagation, l'adaptation du codage de source (notamment dans le cas des codeurs de parole à débit variable de type AMR - « Adaptive Multi-Rate »), les procédures d'adaptation de liens (« Link Adaptation »), etc.

L'efficacité de ce genre de procédure dépend de la disponibilité de mesures énergétiques fiables dans un délai aussi court que possible, afin que les décisions adéquates puissent être prises assez rapidement.

D'un autre côté, certaines situations ne nécessitent nullement la prise en compte de mesures énergétiques trop fréquentes. En particulier, lorsque les conditions sont favorables sur le canal radio considéré, des mesures occasionnelles peuvent suffire à mettre en oeuvre les procédures de contrôle des liens radio, sans encombrer les canaux de signalisation transmettant les rapports de mesures effectuées à un organe de contrôle et sans solliciter de façon excessive les ressources de traitement de l'organe de contrôle pour des analyses de mesures qui ne conduiront, qu'avec une faible probabilité, à des changements utiles dans la gestion des ressources radio.

Cette double exigence a été prise en compte dans certains systèmes comme l'UMTS ("Universal Mobile Telecommunication System") avec la possibilité de définir deux modes de remontées de mesures depuis un émetteur-récepteur fixe ou mobile vers un contrôleur de réseau radio, à l'initiative de ce dernier :

-  un mode périodique, dans lequel des rapports de mesures sont régulièrement transmis au contrôleur de réseau, avec une période de remontée spécifiée par ce dernier, entre 250 ms et 64 s ; et

-  un mode de compte rendu sur événement ("event-triggered"), où l'occurrence d'un événement spécifié, détectée par le terminal ou par l'émetteur-récepteur fixe, provoque l'envoi d'un message de compte rendu au contrôleur.

Cette distinction, ainsi que le détail des événements pouvant donner lieu à une transition entre chacun des deux modes sont décrits de façon plus détaillée dans les spécifications techniques 3G TS 25.331, version 4.1.0, "RRC Protocol Specification", et 3G TS 25.433, version 4.1.0, "UTRAN lub Interface NBAP Signalling", publiées en juin 2001 par le 3GPP.

Il n'est prévu actuellement qu'un ensemble limité d'événements permettant de passer du mode périodique au mode de compte rendu sur événement et inversement. De tels événements sont généralement basés sur une analyse du niveau de champ d'un signal radio reçu. A titre d'exemple, l'événement désigné 1 F prévoit le déclenchement de remontées de mesures, au contrôleur de réseau, sur un lien radio, lorsque le niveau de champ d'un signal reçu sur ce lien passe en deçà d'une valeur seuil.

Dans l'état actuel des choses, les événements spécifiés pour passer d'un mode de remontée de mesures à l'autre ne comprennent pas d'indicateurs techniques pour tenir compte de critères plus précis, ce qui peut conduire à maintenir un rythme de compte rendu de mesures trop élevé ou trop faible dans certains cas. Or, un mauvais choix de la cadence des comptes rendus de mesures peut avoir des conséquences pouvant aller jusqu'à une coupure de communication, par exemple lorsque des mesures de niveau de champ sur des cellules voisines n'ont pas été remontées par un terminal mobile au contrôleur de réseau radio de façon assez fréquente pour permettre un transfert de la communication de la cellule serveuse vers ces cellules voisines, alors que la qualité de la communication se dégradait rapidement sur le lien courant.

WO 99/43178 divulgue un procédé de contrôle de compte rendu de mesures dans un système de radiocommunication, dans lequel des comptes rendus de mesures sont effectués selon un type déterminé lorsque des conditions de déclenchement correspondantes sont détectées. Le mode de compte rendu n'est cependant pas modifié pour tenir compte des circonstances.

WO 01/63960 divulgue un procédé pour remonter des informations de positionnement de terminaux mobiles à un réseau de communication mobile, avec une fréquence éventuellement variable en fonction de la vitesse des terminaux. Toutefois, ce document ne mentionne pas le problème des remontées de mesures de paramètres radio pour permettre un meilleur contrôle des ressources radio.

Un but de la présente invention est de proposer une façon plus fine de réaliser un compromis entre des remontées de mesures à un contrôleur de réseau radio suffisamment fréquentes, pour permettre un meilleur contrôle des ressources radio, sur la base de mesures à jour, et une limitation de ces mêmes remontées de mesures pour éviter une surcharge de signalisation sur la voie radio et un accaparement, par ces mesures, des moyens de traitement du contrôleur de réseau radio.

L'invention propose ainsi un procédé de contrôle d'un mode de compte rendu de mesures faites sur une interface radio entre un terminal mobile et une infrastructure de réseau radio cellulaire, l'infrastructure comprenant au moins un contrôleur de réseau radio et des émetteurs-récepteurs fixes. Selon l'invention, ce procédé étant tel que défini par le revendication 1.

Dans une réalisation typique, l'estimation de vitesse est calculée, au niveau du terminal et/ou d'un émetteur-récepteur fixe, à partir des paramètres de canaux de propagation mesurés, et est incluse dans un message de compte rendu pour être obtenue au contrôleur de réseau radio. Elle pourrait néanmoins être obtenue par d'autres moyens.

Il est envisageable de ne prévoir qu'un mode périodique, avec un réglage de la période tenant compte au moins dans certains cas de la vitesse estimée. Une autre possibilité encore est de ne prévoir qu'un mode sur événement, avec au moins dans certains cas le choix d'un événement plus ou moins probable en fonction de la vitesse estimée.

On favorise de préférence un mode de transmission avec des remontées de mesures relativement fréquentes ou probables lorsque la vitesse estimée du terminal mobile est considérée comme élevée, tandis qu'on favorise un mode de transmission avec des remontées de mesures moins fréquentes ou moins probables lorsque la vitesse estimée du terminal mobile est plutôt faible. Ce mécanisme a l'avantage de transmettre des mesures de paramètres de canaux radio de préférence lorsque la vitesse du terminal mobile indique que ces paramètres sont susceptibles de varier rapidement.

On évite ainsi des remontées de mesures inutiles lorsque les conditions radio sont stables et vont probablement le rester du fait de la faible vitesse du mobile. Au contraire, la mise à jour des mesures au contrôleur de réseau radio est plus fréquente lorsque les conditions radio sont susceptibles de fluctuer rapidement, impliquant la nécessité d'une mise à jour des ressources radio.

De façon avantageuse, une variabilité temporelle d'un signal énergétique sur certains au moins des canaux de l'interface radio fait l'objet de mesures. Cette variabilité ou bien l'évolution de sa valeur dans le temps peuvent alors être prises en compte, en plus de la vitesse estimée du terminal mobile, dans la détermination du mode de compte rendu à appliquer.

L'invention propose également un contrôleur de réseau radio pour une infrastructure de réseau radio cellulaire, comprenant des moyens de réception de messages de compte rendu indiquant des paramètres de propagation radio mesurés entre un terminal mobile et au moins un émetteur-récepteur fixe de l'infrastructure, et des moyens de traitement des messages de compte rendu pour contrôler un mode de transmission d'une partie au moins desdits messages conformément à un procédé tel que défini ci-dessus.

D'autres particularités et avantages de la présente invention apparaîtront dans la description ci-après d'exemples de réalisation non limitatifs, en référence aux dessins annexés, dans lesquels :

- la figure 1 est un schéma d'un réseau UMTS ;
- la figure 2 est un diagramme montrant l'organisation en couches de protocoles de communication employés sur l'interface radio du réseau UMTS;
- la figure 3 est un schéma synoptique de la partie émission d'un émetteur-récepteur radio d'une station de base UMTS ;
- la figure 4 est un schéma synoptique de la partie émission d'un terminal mobile UMTS ;
- la figure 5 est un schéma synoptique d'un récepteur d'une station UMTS ;
- la figure 6 est un schéma synoptique d'un contrôleur de réseau radio UMTS;
- la figure 7 est un graphique utilisable dans certaines formes de réalisation de l'invention; et
- les figures 8 à 11 sont des organigrammes d'exemples de procédures de contrôle de ressources radio exécutées selon l'invention.

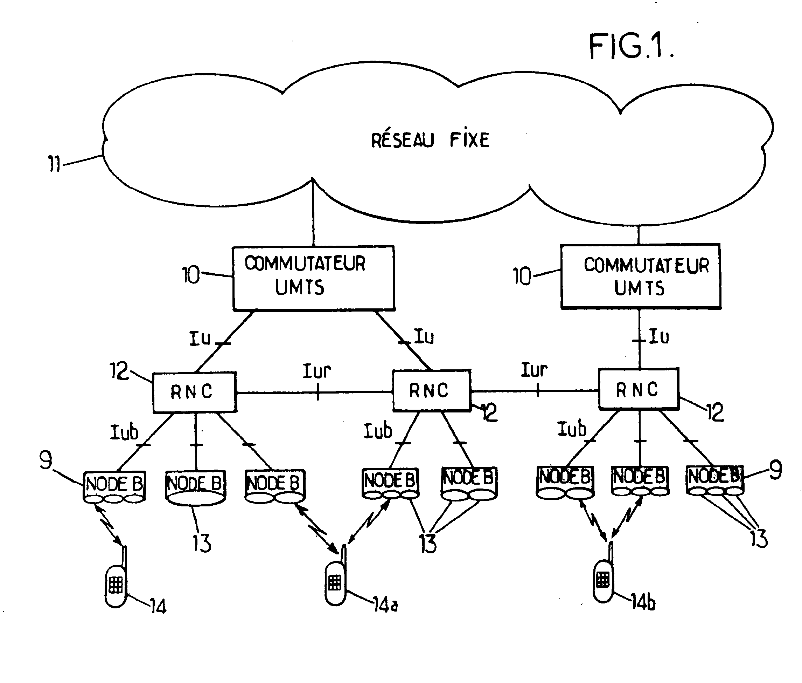

L'invention est décrite ci-après dans son application à un réseau UMTS, dont la figure 1 montre l'architecture.

Les commutateurs du service mobile 10, appartenant un coeur de réseau (CN, "Core Network"), sont reliés d'une part à un ou plusieurs réseaux fixes 11 et d'autre part, au moyen d'une interface dite *lu*, à des équipements de contrôle 12, ou RNC ("Radio Network Controller"). Chaque RNC 12 est relié à une ou plusieurs stations de base 9 au moyen d'une interface dite *lub.* Les stations de base 9, réparties sur le territoire de couverture du réseau, sont capables de communiquer par radio avec les terminaux mobiles 14, 14a, 14b appelés UE ("User Equipment"). Les stations de base 9, aussi appelées « node B », peuvent desservir chacune une ou plusieurs cellules au moyen d'émetteurs-récepteurs respectifs 13. Certains RNC 12 peuvent en outre communiquer entre eux au moyen d'une interface dite *lur.* Les RNC et les stations de base forment un réseau d'accès appelé UTRAN ("UMTS Terrestrial Radio Access Network").

L'UTRAN comporte des éléments des couches 1 et 2 du modèle ISO en vue de fournir les liaisons requises sur l'interface radio (appelée *Uu*), et un étage 15A de contrôle des ressources radio (RRC, "Radio Resource Control") appartenant à la couche 3, ainsi qu'il est décrit dans la spécification technique 3G TS 25.301, "Radio Interface Protocol", version 3.4.0 publiée en mars 2000 par le 3GPP (3rd Generation Partnership Project). Vu des couches supérieures, l'UTRAN agit simplement comme relais entre l'UE et le CN.

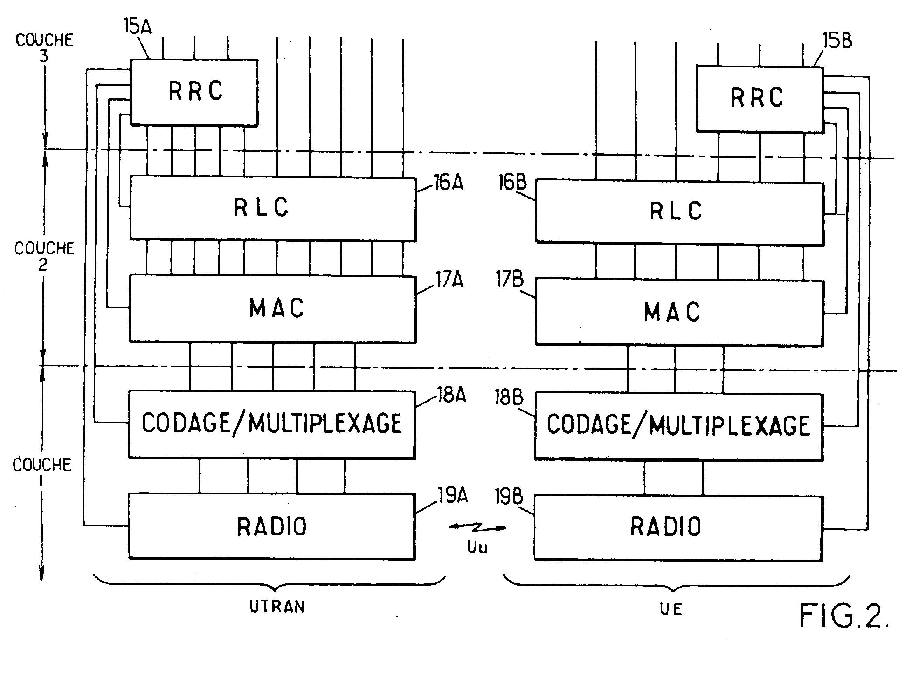

La figure 2 montre les étages RRC 15A, 15B et les étages des couches inférieures qui appartiennent à l'UTRAN et à un UE. De chaque côté, la couche 2 est subdivisée en un étage 16A, 16B de contrôle de liaison radio (RLC, "Radio Link Control") et un étage 17A, 17B de contrôle d'accès au médium (MAC, "Medium Access Control"). La couche 1 comprend un étage 18A, 18B de codage et de multiplexage. Un étage 19A, 19B radio assure l'émission des signaux radio à partir des trains de symboles fournis par l'étage 18A, 18B, et la réception des signaux dans l'autre sens.

Il existe différentes façons d'adapter l'architecture de protocoles selon la figure 2 à l'architecture matérielle de l'UTRAN selon la figure 1, et en général différentes organisations peuvent être adoptées selon les types de canaux (voir section 11.2 de la spécification technique 3G TS 25.401, "UTRAN Overall Description", version 3.1.0 publiée en janvier 2000 par le 3GPP). Les étages RRC, RLC et MAC se trouvent dans le RNC 12. La couche 1 se trouve par exemple dans le node B 9. Une partie de cette couche peut toutefois se trouver dans le RNC 12.

Lorsque plusieurs RNC sont impliqués dans une communication avec un UE, il y a généralement un RNC de desserte appelé SRNC ("Serving RNC"), où se trouvent les modules relevant de la couche 2 (RLC et MAC), et au moins un RNC relais appelé DRNC ("Drift RNC") auquel est relié une station de base 9 avec laquelle l'UE est en liaison radio. Des protocoles appropriés assurent les échanges entre ces RNC sur l'interface *lur,* par exemple ATM ("Asynchronous Transfer Mode") et AAL2 ("ATM Adaptation Layer No. 2"). Ces mêmes protocoles peuvent également être employés sur l'interface lub pour les échanges entre un node B et son RNC.

Les couches 1 et 2 sont chacune contrôlées par la sous-couche RRC, dont les caractéristiques sont décrites dans la spécification technique TS 25.331, "RRC Protocol Specification", version 4.1.0 publiée en juin 2001 par le 3GPP. L'étage RRC 15A, 15B supervise l'interface radio. Il traite en outre des flux à transmettre à la station distante selon un "plan de contrôle", par opposition au "plan d'utilisateur" qui correspond au traitement des données d'utilisateur issues de la couche 3.

L'UMTS utilise la technique CDMA d'étalement de spectre, c'est-à-dire que les symboles transmis sont multipliés par des codes d'étalement constitués d'échantillons appelés "chips" dont la cadence (3,84 Mchip/s dans le cas de l'UMTS) est supérieure à celle des symboles transmis. Les codes d'étalement distinguent différents canaux physiques (PhCH) qui sont superposés sur la même ressource de transmission constituée par une fréquence porteuse. Les propriétés d'auto- et d'intercorrélation des codes d'étalement permettent au récepteur de séparer les PhCH et d'extraire les symboles qui lui sont destinés.

Pour l'UMTS en mode FDD ("Frequency Division Duplex") sur la liaison descendante, un code de brouillage ("scrambling code") est alloué à chaque émetteur-récepteur 13 de chaque station de base 9, et différents canaux physiques utilisés par cet émetteur-récepteur sont distingués par des codes de canal ("channelization codes") mutuellement orthogonaux. L'émetteur-récepteur 13 peut aussi utiliser plusieurs codes de brouillage mutuellement orthogonaux, l'un d'entre eux étant un code de brouillage primaire. Sur la liaison montante, l'émetteur-récepteur 13 utilise le code de brouillage pour séparer les UE émetteurs, et éventuellement le code de canal pour séparer les canaux physiques issus d'un même UE. Pour chaque PhCH, le code d'étalement global est le produit du code de canal et du code de brouillage. Le facteur d'étalement (égal au rapport entre la cadence des chips et la cadence des symboles) est une puissance de 2 comprise entre 4 et 512. Ce facteur est choisi en fonction du débit de symboles à transmettre sur le PhCH.

Les différents canaux physiques sont organisés en trames de 10 ms qui se succèdent sur la fréquence porteuse utilisée. Chaque trame est subdivisée en 15 tranches temporelles ("timeslots") de 666 $\mu$s. Chaque tranche peut porter les contributions superposées d'un ou plusieurs canaux physiques, comprenant des canaux communs et des canaux dédiés DPCH ("Dedicated Physical Channel").

Sur la liaison descendante, l'un des canaux communs est un canal pilote appelé CPICH ("Common Pilot Channel"). Ce canal porte un signal pilote, ou signal de balise, formé à partir d'une séquence de symboles prédéterminée (voir spécification technique 3G TS 25.211, "Physical channels and mapping of transport channels onto physical channels (FDD)", version 3.3.0 publiée en juin 2000 par le 3GPP). Ce signal est émis par l'émetteur-récepteur 13 sur le code de brouillage primaire de la cellule, avec un code de canal déterminé.

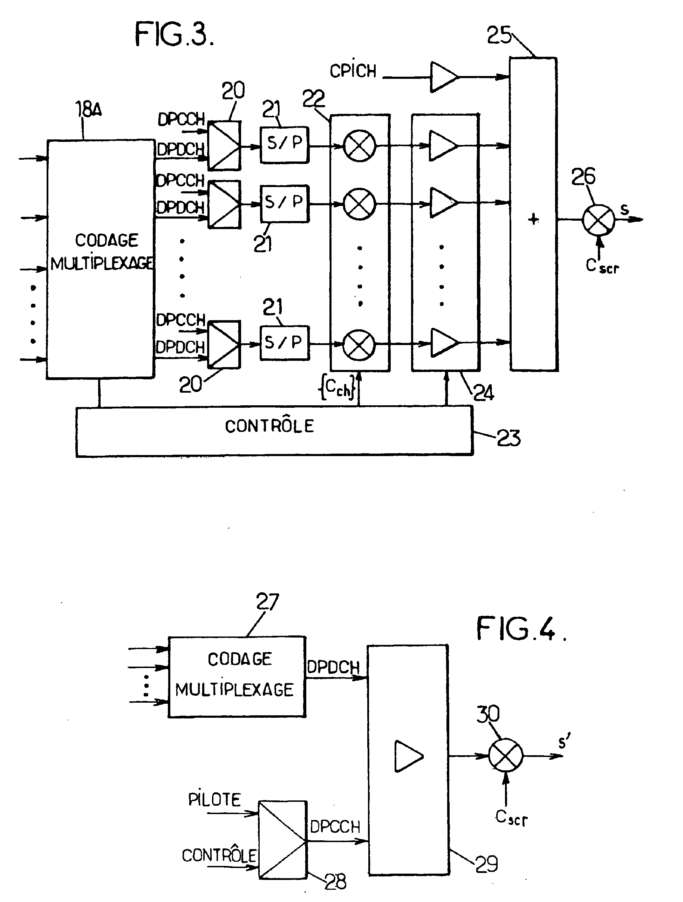

La figure 3 illustre schématiquement la partie émission d'un émetteur-récepteur fixe 13 d'une station de base UMTS, desservant une cellule au moyen d'un code de brouillage $c_{scr}$. La couche 1 peut multiplexer plusieurs canaux de transport (TrCH) issus de la sous-couche MAC sur un ou plusieurs PhCH. Le module 18A reçoit les flux de données des TrCH descendants, issus du RNC, et leur applique les opérations de codage et de multiplexage requises pour former la partie données (DPDCH) des DPCH à émettre. Ces fonctions de codage et de multiplexage sont décrites en détail dans la spécification technique 3G TS 25.212, "Multiplexing and channel coding (FDD)", version 3.3.0 publiée en juin 2000 par le 3GPP.

Cette partie données DPDCH est multiplexée dans le temps, au sein de chaque tranche temporelle de 666 ms avec une partie contrôle (DPCCH) comportant des informations de contrôle et des symboles pilotes prédéterminés, comme schématisé sur la figure 3 par les multiplexeurs 20 qui forment les flux binaires des DPCH. Sur chaque canal, un convertisseur série/parallèle 21 forme un signal numérique complexe dont la partie réelle est constituée par les bits de rang pair du flux et la partie imaginaire par les bits de rang impair. Le module 22 applique à ces signaux complexes leurs codes de canal respectifs $c_{ch}$, qui sont alloués par une unité de contrôle 23. Le module 24 pondère les signaux qui en résultent conformément aux puissances d'émission respectives des canaux physiques, déterminées par un processus de contrôle de puissance.

Les signaux complexes des différents canaux sont ensuite sommés par l'additionneur 25 avant d'être multipliés par le code de brouillage $c_{scr}$ de la cellule au moyen du module 26. L'additionneur 25 reçoit aussi la contribution du CPICH, qui n'est pas multipliée par un code de canal puisque le code de canal du CPICH est constant et égal à 1 (spécification technique 3G TS 25.213, "Spreading and modulation (FDD)", version 3.2.0 publiée en mars 2000 par le 3GPP). Le signal complexe en bande de base s délivré par le module 26 est soumis à un filtre de mise en forme et converti en analogique avant de moduler la fréquence porteuse en QPSK ("Quadrature Phase Shift Keying"), et d'être amplifié et émis par la station de base.

Les différentes ressources d'émission de l'émetteur-récepteur 13 sont allouées aux canaux par l'unité 23 sous le contrôle de l'étage RRC 15A situé dans le RNC. Les messages de contrôle correspondants sont transmis au moyen d'un protocole applicatif de commande des émetteurs-récepteurs, appelé NBAP ("Node B Application Protocol", voir spécification technique 3G TS 25.433, version 4.1.0, "UTRAN lub Interface NBAP Signalling", publiée en juin 2001 par le 3GPP).

La figure 4 illustre schématiquement la partie émission d'un UE. On suppose ici que cet UE émet sur un seul canal physique. Le module 27 assure le codage et éventuellement le multiplexage des TrCH correspondant à un canal physique. Ceci forme un signal réel (DPDCH) qui sera transmis sur une voie I. Parallèlement, des informations de contrôle ainsi que des symboles pilote sont assemblés par un module 28 pour former un signal réel (DPCCH) qui sera transmis sur une voie Q. Les signaux numériques des voies I et Q forment les parties réelle et imaginaire d'un signal complexe dont la puissance d'émission est ajustée par un module 29. Le signal résultant est modulé par le code d'étalement du canal constitué par un code de brouillage $c_{scr}$, comme représenté par le multiplieur 30. Le signal complexe en bande de base s' ainsi obtenu ensuite filtré, converti en analogique avant de moduler la fréquence porteuse en QPSK.

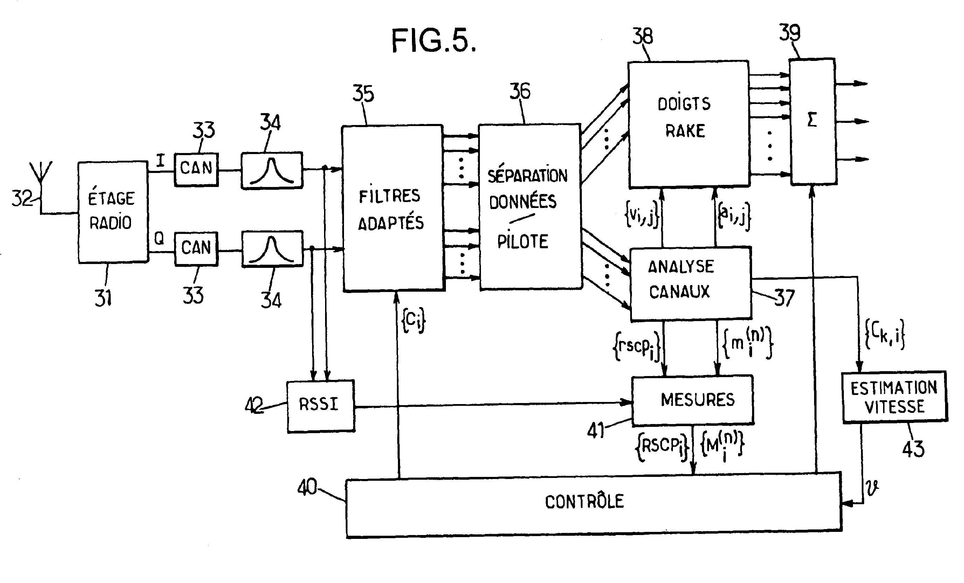

La figure 5 est un schéma synoptique d'un récepteur CDMA pouvant se trouver dans l'UE pour la liaison descendante, ou dans le nœud B pour la liaison montante. Ce récepteur comporte un étage radio 31 qui effectue les traitements analogiques requis sur le signal radio capté par une antenne 32. L'étage radio 31 délivre un signal analogique complexe dont les parties réelle et imaginaire sont numérisées par les convertisseurs analogique-numérique 33 sur des voies de traitement respectives I et Q. Sur chaque voie, un filtre 34 adapté à la mise en forme des impulsions par l'émetteur produit un signal numérique à la cadence des chips des codes d'étalement.

Ces signaux numériques sont soumis à une batterie de filtres adaptés 35. Ces filtres 35 sont adaptés aux codes d'étalement $c_i$ des canaux à prendre en considération. Ces codes d'étalement $c_i$ (produits d'un code de brouillage et d'un éventuel code de canal) sont fournis aux filtres adaptés 35 par un module de contrôle 40 qui gère notamment l'allocation des ressources du récepteur. Du côté du nœud B, le module de contrôle 40 est supervisé par l'étage RRC 15A du RNC à travers le protocole NBAP. Du côté de l'UE, le module de contrôle 40 est supervisé par l'étage RRC 15B.

Pour N canaux physiques (codes d'étalement) pris en compte, les filtres adaptés 35 délivrent N signaux réels sur la voie I et N signaux réels sur la voie Q, qui sont fournis à un module 36 de séparation entre les données et les signaux pilotes. Pour les liaisons descendantes, la séparation consiste à extraire les portions des tranches temporelles contenant les signaux pilotes complexes émis par le nœud B pour les fournir au module 37 d'analyse des canaux, les données correspondantes étant adressées aux doigts 38 du récepteur rake. Dans le cas des liaisons montantes, la séparation opérée par le module 36 consiste à extraire les signaux pilotes réels de la voie Q relative à chaque canal pour les fournir au module d'analyse 37.

Pour chaque canal physique, dénoté par un indice entier i, le module d'analyse 37 identifie un certain nombre de trajets de propagation, dénotés par un indice j, sur la base de la portion du signal de sortie du filtre adapté 35 correspondant aux symboles pilotes, qui constitue un échantillonnage de la réponse impulsionnelle du canal.

Il existe différentes façons possibles de représenter les trajets de propagation pour le récepteur rake. Une méthode consiste à rechercher les maxima de la réponse impulsionnelle du canal échantillonnée en sortie du filtre adapté 35, moyennée sur une période de l'ordre de la centaine de millisecondes. Chaque trajet de propagation est alors représenté par un retard $t_{i,j}$ correspondant à l'un des maxima, d'amplitude instantanée $a_{i,j}$. Dans ce cas, le traitement effectué dans chaque doigt 38 du récepteur rake, alloué au trajet j du canal i, consiste à échantillonner le signal reçu sur le canal i avec le retard $t_{i,j}$ et à multiplier le résultat par $a_{i,j}^*$. Les trajets sélectionnés sont ceux pour lesquels les énergies de réception sont les plus grandes, l'énergie de réception suivant un trajet j d'un canal i étant égale à la moyenne de $|a_{i,j}|^2$.

Dans une autre représentation possible (voir WO01/41382) chaque trajet de propagation d'un canal i est représenté par un vecteur propre $v_{i,j}$ de la matrice d'autocorrélation du vecteur de réponse impulsionnelle fourni par le filtre adapté 35. Dans le traitement effectué dans le doigt 38 du récepteur rake, l'échantillonnage avec le retard $t_{i,j}$ est alors remplacé par le produit scalaire du vecteur de sortie du filtre adapté 35 par le vecteur propre $v_{i,j}$. Pour estimer les vecteurs propres $v_{i,j}$, le module d'analyse 37 effectue une diagonalisation de la matrice d'autocorrélation, qui fournit également les valeurs propres associées $\lambda_{i,j}$. La valeur propre $\lambda_{i,j}$ égale à l'espérance mathématique de $|a_{i,j}|^2$, représente l'énergie de réception du signal sur le trajet j du canal i.

Le module de combinaison 39 du récepteur rake reçoit les contributions des doigts 38 et, pour chaque canal i, calcule la somme des contributions respectives des trajets retenus j, indiqués par le module de contrôle 40. Le résultat est l'estimation locale des symboles d'information transmis sur le canal i.

Dans le cas d'un UE recevant des signaux descendants en mode de macrodiversité, c'est-à-dire depuis plusieurs émetteurs-récepteurs 13 utilisant des codes d'étalement différents, le module 39 peut également additionner les contributions des canaux de propagation correspondants afin d'obtenir le gain en diversité. Les estimations combinées qui en résultent sont alors soumises à l'étage de décodage et de démultiplexage (non représenté sur la figure 5).

Dans le cas d'une station de base 9 recevant sur plusieurs émetteurs-récepteurs 13 des signaux montants issus d'un même terminal mobile en mode de macrodiversité, les estimations locales délivrées par les modules de combinaison respectifs 39 de ces émetteurs-récepteurs 13 sont également combinées afin d'obtenir le gain en diversité.

Dans le cas d'une macrodiversité montante entre plusieurs stations de base 9 recevant des signaux issus d'un même terminal mobile, les estimations locales délivrées par les modules de combinaison respectifs 39 des émetteurs-récepteurs 13 sont soumises à l'étage de décodage et de démultiplexage (non représenté sur la figure 5) pour obtenir les symboles estimés du ou des TrCH concernés. Ces symboles sont transmis au SRNC par l'intermédiaire de l'interface *lub* (*lur*) dans lequel ils sont combinés afin d'obtenir le gain en diversité.

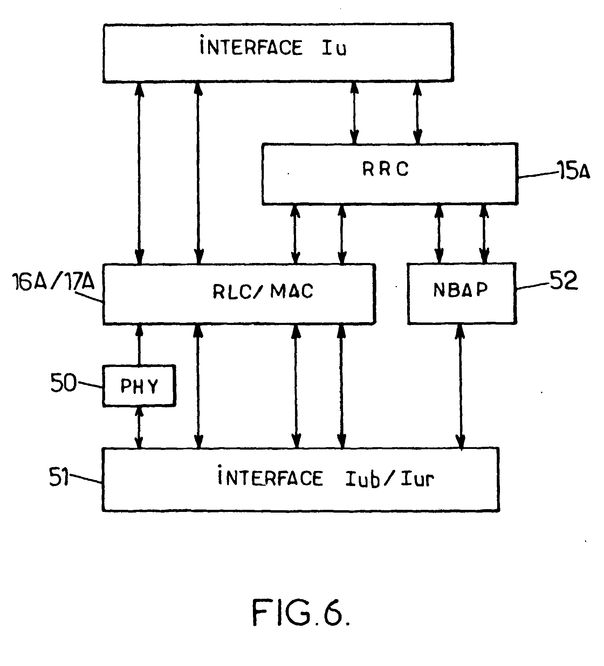

Le module de combinaison correspondant du RNC 12 est désigné par la référence 50 sur la figure 6. Ce module récupère sur l'interface *lub* et/ou *lur* 51 les symboles du TrCH issus des différentes stations de base et les fournit l'étage MAC 17A après combinaison. Dans le sens descendant, ce module 50 appartenant à la couche physique se charge de diffuser les flux des TrCH issus de l'étage MAC 17A vers les stations de base concernées.

La figure 6 illustre en outre schématiquement une instance 52 du protocole NBAP exécutée au niveau du RNC 12 pour contrôler une station de base distante. Le dialogue entre l'étage RRC 15A du RNC et celui 15B d'un UE s'effectue au moyen d'une "connexion RRC" gérée comme décrit dans la section 8.1 de la spécification technique 3G TS 25.331 précitée.

Les procédures du protocole RRC comprennent des procédures de mesure décrites dans la section 8.4 de la spécification technique 3G TS 25.331, qui servent notamment à la mise à jour de l'ensemble actif pour les UE en macrodiversité (ou SHO) ainsi qu'à l'ajustement des puissances d'émission des émetteurs-récepteurs de l'ensemble actif. Les mesures souhaitées par le RNC sont demandées aux UE dans des messages "MEASUREMENT CONTROL", dans lesquels sont également indiqués les modes de compte rendu, par exemple avec une périodicité spécifiée ou en réponse à certains événements. Les mesures spécifiées par le RNC sont alors effectuées par l'UE qui les remonte sur la connexion RRC dans des messages "MEASUREMENT REPORT" (voir sections 10.2.17 et 10.2.19 de la spécification technique 3G TS 25.331). Ces messages "MEASUREMENT CONTROL" et "MEASUREMENT REPORT" sont relayés de façon transparente par les émetteurs-récepteurs 13 des stations de base.

Plusieurs algorithmes, non normalisés peuvent être utilisés par le SRNC pour déterminer les émetteurs-récepteurs 13 de l'ensemble actif. Dans certains cas, ces algorithmes de détermination de l'ensemble actif peuvent prendre en compte des mesures montantes, réalisées par les émetteurs-récepteurs 13 des stations de base et remontées conformément aux procédures NBAP décrites dans les sections 8.3.8 à 8.3.11 de la spécification technique 3G TS 25.433 précitée. Le RNC indique au node B les mesures dont il a besoin dans un message "DEDICATED MEASUREMENT INITIATION REQUEST", et le node B les remonte dans un message de compte rendu "DEDICATED MEASUREMENT REPORT" (voir sections 9.1.52 et 9.1.55 de la spécification technique 3G TS 25.433).

Les modifications de l'ensemble actif sont notifiées à l'UE (module de contrôle 40 du récepteur) au moyen des procédures de mise à jour de l'ensemble actif en SHO du protocole RRC, décrites dans la section 8.3.4 de la spécification technique 3G TS 25.331 (message "ACTIVE SET UPDATE" de la section 10.2.1).

Ces modifications donnent également lieu à l'envoi de signalisation du RNC aux stations de base 9 au moyen des procédures d'établissement, d'addition, de reconfiguration et de suppression de liens radio du protocole NBAP, décrites dans la section 8 de la spécification technique 3G TS 25.433.

Les mesures prises en considération par le RNC pour contrôler les liens radio en SHO comprennent des mesures de puissance effectuées sur les signaux ou canaux pilotes, obtenues par un module de mesure 41 représenté sur la figure 5. Diverses mesures que doivent pouvoir faire les terminaux mobiles et les stations de base sont listées dans la spécification technique 3G TS 25.215, "Physical layer - Measurements (FDD)", version 3.3.0 publiée en juin 2000 par le 3GPP. Les mesures obtenues par le module 41 sont transmises au RNC par l'intermédiaire du module de contrôle 40 et de la connexion RRC (mesure de l'UE) ou du protocole NBAP (mesure du node B).

Pour un canal i donné, la somme des valeurs propres $\lambda_{i,j}$, déterminées par le module d'analyse 37 pour les p trajets de propagation pris en considération ($1 \leq j \leq p$), représente l'énergie globale reçue sur le canal, ramenée à la durée d'un symbole. Cette énergie est appelée RSCP dans la norme ("Received Signal Code Power"). Le module d'analyse 37 détermine également pour chaque canal i la puissance résiduelle du bruit après prise en compte des p trajets. Cette puissance résiduelle est appelée ISCP dans la norme ("Interference Signal Code Power"). La quantité (RSCP/ISCP)$\times$(SF/2) représente le rapport signal-sur-interféreurs (SIR, "Signal-to-Interferer Ratio") pour un canal descendant, SF désignant le facteur d'étalement du canal. Le SIR est égal à (RSCP/ISCP)$\times$SF pour un canal montant.

En pratique, une quantité de type RSCP est estimée dans la couche physique du récepteur (module 37) sur

une durée $d_1$ de l'ordre de la centaine de millisecondes, et la valeur estimée est remontée à la couche RRC (ou NBAP) si un paramètre correspondant est requis par le RNC. En général, il est requis avec une période de moyennage supérieure $d_2$, par exemple de l'ordre de la demi-seconde. Les valeurs remontées par la couche physique sont donc moyennées entre elles par le module 41 pour déterminer la mesure à fournir au RNC. Les deux périodes d'estimation $d_1$, $d_2$ sont réglables.

Le SIR, évalué sur les symboles pilotes transmis sur un canal dédié, est une mesure que le RNC peut demander à l'UE ou au node B, et il peut éventuellement en tenir compte dans la gestion de l'ensemble actif.

Le récepteur radio est en outre capable de mesurer la puissance reçue dans la bande passante des signaux autour d'une porteuse UMTS. Cette puissance, mesurée par un module 42 en amont des filtres adaptés 35, est indiquée par la quantité appelée RSSI ("Received Signal Strength Indicator").

Une estimation de la vitesse de déplacement de l'UE peut être également faite, selon différentes méthodes. Selon l'une d'entre elles, le module d'analyse 37 du récepteur radio permet de calculer l'énergie $C_{k,i}$ d'un bloc de signal reçu sur les p trajets de propagation considérés pour le canal i. Cette énergie $C_{k,i}$ ramenée à la durée d'un bit, est donnée par la somme des modules carrés des amplitudes $a_{i,j}$ :

$$C_{k,i} = \frac{1}{N} \sum_{j=1}^{p} \beta_{k,i} \left| a_{i,j} \right|^2 \qquad (1)$$

où N est le nombre de symboles pilotes du bloc de signal considéré et $\beta_{k,i}$ est un coefficient pondérateur tenant compte de l'amplification ou de l'atténuation introduite, le cas échéant, par les procédures de contrôle de la puissance d'émission.

Le récepteur dispose ainsi d'un échantillon de mesure énergétique C par bloc de signal reçu. Dans les canaux dédiés du système UMTS, ce bloc correspond à un intervalle de temps de 2560 chips, soit 666 $\mu$s, et le nombre N peut aller 2 à 16 (voir sections 5.2.1 et 5.3.2 de la spécification technique 3G TS 25.211 v3.3.0 « Physical channels and mapping of transport channels onto physical channels (FDD) (Release 1999) » publiée en juin 2000 par le 3GPP (« Third Generation Partnership Project »)).

A partir de ces échantillons de mesure $C_{k,i}$, il est possible d'estimer la vitesse v de déplacement de la station mobile. Cette estimation peut avoir lieu dans la station mobile sur la base du signal descendant, ou dans la station fixe sur la base du signal montant.

L'estimation de vitesse peut notamment exploiter la propriété que la variance de la dérivée première de $C_{k,i}$ par rapport au temps est l'opposée de la dérivée seconde de la fonction d'autocorrélation $R_{CC}(\tau)$ de l'énergie $C_{k,i}$ pour un décalage temporel $\tau = 0$, cette dérivée seconde étant elle-même proportionnelle au carré de la vitesse. Dans le cadre du modèle de Jake et pour un signal d'énergie a, la constante de proportionnalité vaut $-\left( \frac{2\pi^2 V^2}{\lambda^2} \right) a^2$, $\lambda$ étant la longueur d'onde radio utilisée.

En pratique, le module 43 peut estimer la vitesse de déplacement v de la manière suivante. On se donne une durée sur laquelle s'applique l'estimation de vitesse, exprimée en nombre d'échantillons de mesure m. L'énergie a est estimée par la moyenne des échantillons $C_{k,i}$, indexés par un entier k dans l'équation (2) :

$$a = \frac{1}{m} \sum_{k=1}^{m} C_{k,i} \qquad (2)$$

Le module 43 détermine la suite dérivée de $C_{k,i}$: $D_{1,i}$, $D_{2,i}$, ..., $D_{p,i}$ avec $D_{k,i} = (C_{k,i}-C_{k-1,i})/T_e$, où $T_e$ est la durée entre deux échantillons de mesure. La variance de cette suite est estimée par :

$$S = \frac{1}{m} \sum_{k=1}^{m} D_{k,i}^2 \qquad (3)$$

Le module 43 peut alors estimer la vitesse v selon :

$$V = \frac{1}{\sqrt{2}} \cdot \frac{\lambda}{\pi.a} \cdot \sqrt{S} \qquad (4)$$

La durée $p.T_e$ est typiquement de l'ordre de grandeur de la seconde. En pratique, les moyennes arithmétiques des relations (2) et (3) peuvent être remplacées par un lissage de type exponentiel avec un facteur d'oubli $\alpha = 1/p$.

Les estimations concernant la vitesse sont transmises au RNC par l'intermédiaire de la connexion RRC ou de l'interface lub.

De même, pour permettre une prise en compte plus fine des caractéristiques de propagation par les algorithmes de détermination de l'ensemble actif et de contrôle de puissance pour cet ensemble actif, il est avantageux de transmettre en outre au RNC des données dépendant de la variabilité temporelle du niveau énergétique reçu. Pour cela, des choix de valeur particuliers sont prévus dans les éléments d'information (IE) "INTRA-FREQUENCY MEASUREMENT" et "MEASURED RESULTS" des messages précités "MEASUREMENT CONTROL" et "MEASUREMENT REPORT" du protocole RRC pour les mesures descendantes, et dans les IE "DEDICATED MEASUREMENT TYPE" et "DEDICATED MEASUREMENT VALUE" des messages précités "DEDICATED MEASUREMENT INITIATION REQUEST" et "DEDICATED MEASUREMENT REPORT" du protocole NBAP pour les mesures montantes.

Par ailleurs, les UE en communication surveillent en parallèle les énergies reçues sur les canaux CPICH des cellules appartenant à un ensemble surveillé MS ("monitored set") comprenant l'ensemble actif et un certain nombre de cellules avoisinantes. Ces mesures d'énergie sont généralement remontées au RNC dans les messages "MEASUREMENT REPORT". Les grandeurs remontées peuvent être les énergies absolues (CPICH_RSCP) ou normalisées par rapport à l'énergie du signal reçu (CPICH_Ec/N0 = CPICH_RSCP / RSSI). Etant donné que le réseau signale aux UE les puissances d'émission des nodes B sur les canaux CPICH, notées CPICH_Tx_Power, l'UE peut aussi calculer l'atténuation du signal ("pathloss") sur le canal de propagation depuis chaque node B de l'ensemble surveillé (PL = CPICH_Tx_Power / CPICH_RSCP). La norme prévoit que le RNC puisse demander à l'UE qu'il lui rende compte de ce paramètre d'atténuation (3G TS 25.331, sections 10.3.7.38 et 14.1.1).

Le module d'analyse 37 du récepteur calcule les valeurs propres $\lambda_{i,j} = E\left(\left|a_{i,j}\right|^2\right)$, qui sont sommées sur l'indice de trajet j pour obtenir le RSCP du canal i estimé sur la durée $d_1$: $rscp_i = \sum_j \lambda_{i,j}$. Il dispose aussi des valeurs instantanées des amplitudes complexes $a_{i,j}$ correspondant aux symboles pilotes successifs, et donc des énergies instantanées $r_i = \sum_j \left|a_{i,j}\right|^2$ dont $rscp_i$ est l'espérance mathématique estimée sur la durée $d_1$. Selon l'invention, le module 37 estime en outre un ou plusieurs moments d'ordre n de la distribution temporelle des énergies $r_i$, donnés par $m_i(n) = E(r_i^n - E(r_i)^n)$. Dans une réalisation simple, cette estimation se limite au moment d'ordre n = 2, c'est-à-dire à la variance: $m_i(2) = E(r_i^2) - rscp_i^2$.

Le module de mesure 41 récupère les valeurs $rscp_i$ et $m_i^{(n)}$ et en calcule les moyennes respectives sur la durée $d_2$ spécifiée par le RNC dans le message MEASUREMENT CONTROL pour obtenir les mesures $RSCP_i$ (moyenne des $rscp_i$) et $M_i^{(n)}$ (moyenne des $m_i^{(n)}$ à transmettre au RNC 12.

Dans une réalisation typique, les canaux physiques concernés seront les CPICH issus des émetteurs-récepteurs de l'ensemble surveillé MS, les mesures étant remontées par l'UE sous la forme de couples $(RSCP_i, V_i)$ ou $(PL_i, V_i)$, avec $V_i = M_i^{(2)}$ et $PL_i$ désignant le "pathloss" calculé pour la cellule i. Il est aussi possible de remonter un ou plusieurs moments d'ordre n > 2

Les canaux physiques concernés peuvent aussi être des canaux dédiés, les mesures étant effectuées soit du côté UE soit du côté node B. Dans ce cas, les mesures ainsi mises à disposition du RNC se limitent aux cellules de l'ensemble actif.

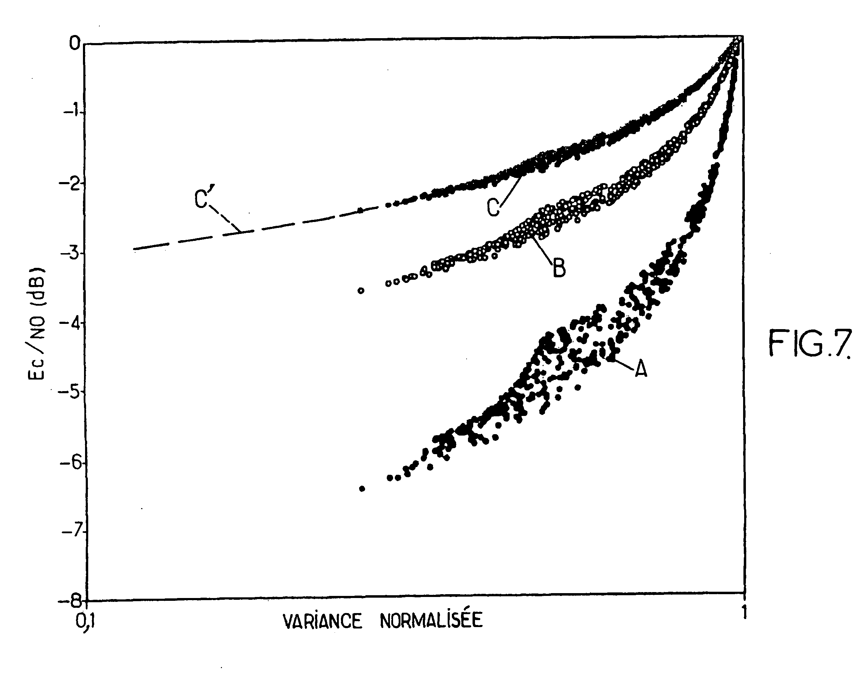

La figure 7 montre des résultats de simulations de la relation entre la variance normalisée $\dfrac{V_i}{(RSCP_i)^2}$ et le rapport Ec/NO (énergie par chip sur densité de puissance du bruit, exprimé en dB) nécessaire pour obtenir un taux d'erreur binaire (BER, "binary error rate") donné en sortie d'un récepteur rake appliquant la méthode MRC pour traiter les trajets du canal de propagation i. Chaque point correspond à un profil de propagation simulé, tiré aléatoirement en faisant varier le nombre de trajets ainsi que leurs énergies relatives. Les nuages de points A, B et C correspondent respectivement à des BER de 1%, 5% et 10%.

Ce graphique permet de relever qu'à atténuations égales, il y a intérêt à favoriser les canaux de propagation pour lesquels la variance estimée est faible car il requièrent un plus faible rapport Ec/N0. Ces canaux sont normalement ceux qui présentent le plus de trajets décorrélés.

Cet effet peut être exploité dans diverses procédures de contrôle de ressources radio supervisées par le RNC, en particulier pour la détermination de l'ensemble actif et le réglage de la puissance d'émission des émetteurs-récepteurs de l'ensemble actif vis-à-vis d'un terminal mobile.

Pour déterminer l'ensemble actif, l'algorithme exécuté au RNC peut admettre comme variables d'entrée les atténuations $PL_i$ et les variances $V_i$ mesurées par l'UE pour les différentes cellules de l'ensemble surveillé MS et remontées sur la connexion RRC. Les atténuations $PL_i$ peuvent avoir été demandées explicitement à l'UE, ou être déduites par le RNC des mesures de types $RSCP_i$, étant donné que les puissances CPICH_Tx_Power sont connues du RNC pour être diffusées avec les informations système.

A titre d'exemple, l'algorithme de détermination de l'ensemble actif peut considérer différents sous-ensembles $C(k)$ de cellules de l'ensemble surveillé MS, qui sont candidats pour constituer l'ensemble actif relativement à un UE donné ($k = 1, 2, ...$) et retenir celui qui maximise un critère $R(k)$ défini comme suit. On note $PL_{min}$ la valeur d'atténuation la plus faible (correspondant au meilleur gain) parmi les cellules de l'ensemble surveillé $\left( PL_{min} = \min_{i \in MS} \{ PL_i \} \right)$,

$$\text{et } D(k) = 10.\log_{10}\left( \frac{PL_{min}}{N(k). \sum_{i \in C(k)} PL_i} \right)$$ le bilan (négatif ou nul) de l'ensemble candidat $C(k)$ composé de $N(k)$

cellules par rapport à l'ensemble candidat constitué de la seule cellule présentant la valeur d'atténuation minimale, dans l'hypothèse où la puissance émise serait répartie uniformément entre les $N(k)$ cellules. Après avoir estimé les quantités $D(k)$, on peut éventuellement éliminer certains des ensembles candidats $C(k)$, pour lesquels ces quantités tombent en dessous d'un seuil négatif déterminé, par exemple de l'ordre de -2 à -5 dB. Pour chaque candidat restant $C(k)$, on estime alors un gain de diversité $G(k)$ à partir de la variance normalisée $V(k)$ de la somme des contributions des $N(k)$ cellules. Dans le cas d'un ensemble $C(k)$ de $N(k) = 2$ cellules d'index i et j, cette variance normalisée est donnée par

$$V(k) = \frac{PL_i^2.V_i + PL_j^2.V_j}{\left( PL_i + PL_j \right)^2},$$ toujours dans l'hypothèse d'une répartition uniforme de la puissance émise entre les cellules. A l'aide d'une abaque ou d'une formule empirique, cette variance normalisée $V(k)$ est convertie en un gain $G(k)$ en termes de rapport Ec/N0 ($G(k) \geq 0$, exprimé en dB) en faisant référence à une valeur de BER déterminée. Il est courant de faire référence à un BER de 10%, de sorte qu'une telle formule empirique peut être obtenue à l'aide d'une courbe paramétrique C' présentant une distance minimale, par exemple au sens des moindres carrés, avec les points C correspondant à cette référence de BER dans une simulation de canaux telle que celle illustrée par la figure 7. Le critère $R(k)$ à maximiser est finalement évalué en faisant la somme de la quantité $D(k)$ et du gain de diversité $G(k)$, soit $R(k) = D(k) + G(k)$.

Les procédures de réglage de la puissance d'émission des émetteurs-récepteurs de l'ensemble actif vis-à-vis d'un terminal mobile ont pour objectif d'équilibrer la puissance descendante émise par ces émetteurs-récepteurs fixes (section 5.2 de la spécification technique TS 25.214, "Physical Layer procédures (FDD)", version 3.6.0, publiée par le 3GPP en mars 2001). La façon dont le RNC commande les nodes B pour leur fournir les paramètres d'équilibrage requis est décrite dans la section 8.3.7 de la spécification technique 3G TS 25.433 précitée. Le paramètre "Pref", évoqué dans ladite section, peut être ajusté cellule par cellule pour contrôler la répartition de la puissance sur l'ensemble des émetteurs-récepteurs de l'ensemble actif. Là encore de nombreuses stratégies de contrôle de puissance peuvent apparaître.

A titre d'exemple, dans un cas où l'ensemble actif (déterminé comme indiqué précédemment ou de toute autre manière) comporte deux cellules d'index i et j, dont les valeurs d'atténuation $PL_i$ ne sont pas trop éloignées, au sens où leur écart est inférieur à un seuil déterminé, une possibilité est d'appliquer à la cellule i un coefficient de pondération $x_i$

donné par $x_i = \dfrac{PL_j.V_j}{PL_i.V_i + PL_j.V_j}$ et à la cellule j un coefficient de pondération $x_j = 1 - x_i$, afin de favoriser la cellule pour laquelle la variance est la plus faible, c'est-à-dire celle qui génère le plus de diversité.

Les variations de puissance à mettre en oeuvre peuvent généralement être déterminées de façon empirique à l'aide de simulations. On obtient alors une table de correspondance donnant les paramètres de réglage de la puissance d'émission à adresser à chacun des émetteurs-récepteurs, en fonction de différentes valeurs d'atténuations et de variance pour chaque émetteur-récepteur. Une fois constituée, cette table peut être stockée dans le RNC 12. Ce dernier peut y faire appel après analyse des mesures qui lui sont remontées, de manière à renvoyer à chaque émetteur-récepteur les paramètres de réglage adéquats de leur puissance d'émission.

Lorsque les mesures de données de variabilité sont effectuées sur des canaux dédiés (par les nodes B ou par les UE) plutôt que sur les CPICH, leur prise en compte par les procédures de réglage de la puissance d'émission peut être semblable à ce qui vient d'être décrit. Pour la détermination de l'ensemble actif, ces mesures sont essentiellement exploitables pour décider si une cellule donnée doit être maintenue dans l'ensemble actif.

Comme autre exemple d'utilisation des mesures de variabilité fournies au RNC conformément à l'invention, on peut citer la fixation de la consigne initiale pour la boucle fermée de contrôle de puissance d'émission depuis un UE. De façon connue (voir spécification technique 3GPP TS 25.401, version 4.2.0 publiée en septembre 2001, section 7.2.4.8), la puissance d'émission de l'UE est asservie à la hausse ou à la baisse par des bits TPC ("Transmit Power Control") insérés par le node B dans chaque tranche temporelle de 666 $\mu$s. Ces bits TPC sont déterminés par le node B dans une boucle fermée rapide visant à aligner le SIR du signal reçu de l'UE sur une consigne $SIR_{target}$ que lui assigne le RNC. Cette consigne est déterminée par le RNC dans une boucle externe plus lente de manière à atteindre un objectif de qualité de communication, généralement exprimé en termes de taux d'erreur par blocs (BLER). Il est souhaitable de fixer une valeur initiale pertinente pour la consigne $SIR_{target}$ afin de réduire le temps de convergence de la boucle externe. Ceci peut être effectué en tenant compte des données de variabilité mesurées par le mobile sur le CPICH avant l'établissement du canal et remontées au RNC: le $SIR_{target}$ initial sera typiquement choisi plus faible lorsque la variance mesurée est basse que lorsqu'elle est élevée. Cette valeur initiale est fournie au node B dans le message RADIO LINK SETUP REQUEST du protocole NBAP (3G TS 25.433, sections 8.2.17 et 9.1.36).

Les mesures de vitesse ainsi que les mesures de variabilité, fournies au RNC conformément à l'invention sont aussi exploitables dans le cadre des procédures de détermination du mode de transmission au RNC de messages "MEASUREMENT REPORT" depuis un UE, ou de messages "DEDICATED MEASUREMENT REPORT" depuis un node B.

La norme prévoit un mode de compte rendu sur événement et un mode de compte rendu périodique. Dans le mode périodique, plusieurs périodes de compte rendu peuvent être définies. Dans le mode sur événement, plusieurs événements déclencheurs peuvent être définis.

Dans le protocole RRC, le mode périodique ou sur événement est spécifié par l'IE "MEASUREMENT REPORTING MODE" du message "MEASUREMENT CONTROL", tandis que la période ou l'événement déclencheur est spécifié dans l'IE "INTRA-FREQUENCY MEASUREMENT" de ce même message (3G TS 25.331, sections 10.2.17, 10.3.7.36 et 10.3.7.49). Les périodes possibles vont de 250 ms à 64 s (section 10.3.7.53). Neuf familles d'événements déclencheurs, notées de 1a à 1i, sont prévues (section 10.3.7.39).

Dans le protocole NBAP, le mode périodique ou sur événement est spécifié par l'IE "REPORT CHARACTERISTICS" du message "DEDICATED MEASUREMENT INITIATION REQUEST", ainsi que la période ou l'événement déclencheur (3G TS 25.433, sections 9.1.52 et 9.2.1.51). Les périodes possibles vont de 10 ms à 1 h. Six familles d'événements déclencheurs, notées de A à F, sont prévues (section 8.3.8.2).

Le mode sur événement a pour avantage lorsque les conditions de réception radio restent bonnes (l'événement spécifié ne survient pas), que les interfaces *Uu* et *Iub* ne sont pas chargées inutilement avec des messages "MEASUREMENT REPORT" et/ou "DEDICATED MEASUREMENT REPORT" et que le RNC ne perd pas son temps à exécuter ses algorithmes de gestion de ressources radio sur les données contenues dans ces messages. En revanche, si les conditions de réception radio risquent de se dégrader prochainement, il y a intérêt à privilégier le mode périodique, de préférence avec une période courte.

La mise en oeuvre de l'invention conduit à privilégier le mode de compte rendu sur événement au détriment du mode périodique lorsque la vitesse de déplacement estimée de l'UE considérée est relativement faible. A l'intérieur du mode périodique, elle conduit à privilégier une période de remontées de mesures élevée lorsque la vitesse de déplacement estimée de l'UE considérée est faible. En effet, la vitesse faible de l'UE indique que les conditions radio ne vont pas être modifiées très rapidement et donc que des mesures trop fréquentes sont inutiles. Au contraire, le mode de compte rendu périodique éventuellement avec une période de remontée faible est privilégié lorsque la vitesse de déplacement de l'UE considérée est relativement élevée.

On adoptera donc un mode de compte rendu donnant lieu à des messages plus fréquents ou plus probables lorsque la vitesse estimée de l'UE est élevée que quand elle est faible. A l'intérieur du mode périodique (qui est parfois le seul implémenté), le RNC aura tendance à raccourcir les périodes spécifiées dans le message "MEASUREMENT CONTROL" ou "DEDICATED MEASUREMENT INITIATION REQUEST" lorsque les vitesses mesurées sont grandes, et vice-versa. A l'intérieur du mode sur événement, il est aussi possible de modifier l'événement surveillé, et notamment la plage de valeurs spécifiée dans la définition de cet événement, afin qu'il devienne plus probable en présence de vitesses élevées.

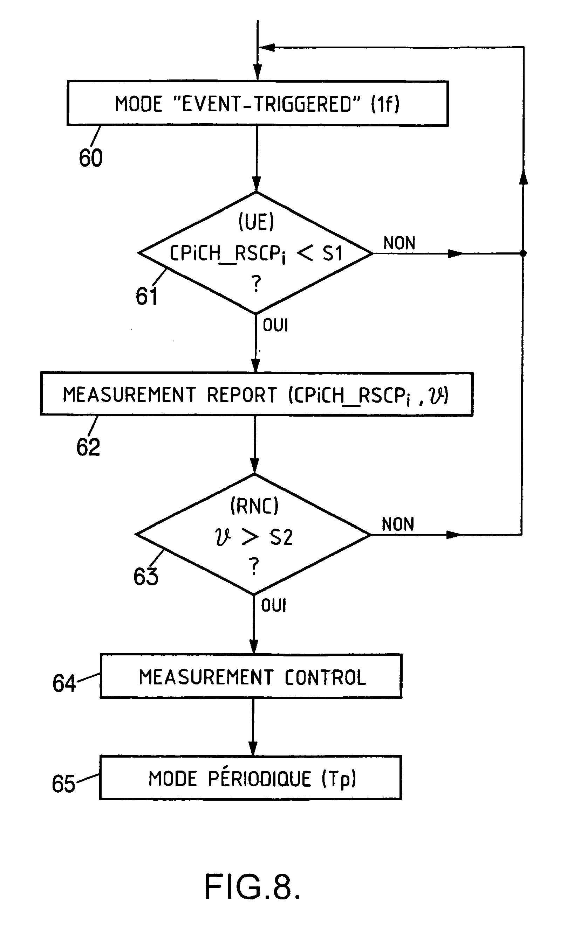

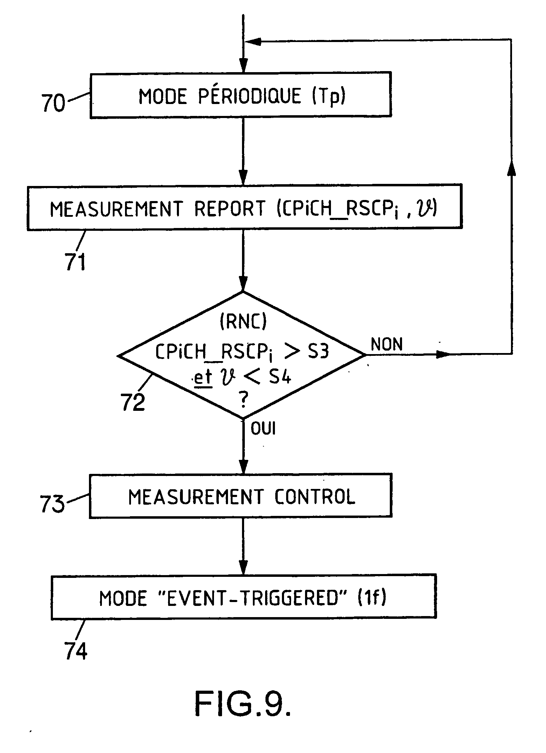

Les figures 8 et 9 illustrent un exemple de procédure utilisable par le RNC 12 pour spécifier le mode de compte rendu auquel devra obéir l'UE 14 en tenant compte de l'information procurée par les estimations de vitesse de l'UE.

Ces figures font référence au protocole RRC. Des procédures semblables peuvent être mises en oeuvre pour commander les nodes B 13 à l'aide du protocole NBAP.

Dans l'exemple de la figure 8, le terminal est initialement en mode sur événement, et l'événement 1f de la norme lui a été spécifié (étape 60). En conséquence, l'UE surveille les mesures de niveau de puissance reçues de sa cellule de desserte i, par exemple le paramètre $CPICH\_RSCP_i$, en le comparant à un seuil S1 (étape 61). Tant que le niveau reste supérieur à ce seuil, l'UE reste en mode sur événement. Lorsque le niveau de puissance chute en dessous du seuil S1, l'UE adresse à son RNC un message « MEASUREMENT REPORT » précisant notamment les derniers paramètres $CPICH\_RSCP_i$ et la vitesse estimée V de l'UE (étape 62). Dans l'analyse de ces mesures, le RNC compare la vitesse V à un autre seuil S2 prédéterminé (étape 63). Si $V \leq S2$, le RNC considère que l'UE se déplace lentement, de sorte qu'il maintient l'UE en mode de compte rendu sur événement, c'est-à-dire qu'il ne lui adresse pas de message « MEASUREMENT CONTROL ». En revanche, si V > S2 à l'étape 63, le RNC envoie à l'UE un message « MEASUREMENT CONTROL » à l'étape 64, afin que celui-ci passe en mode périodique à l'étape 65 avec une période de compte rendu Tp relativement courte.

Dans une autre variante, lorsque la vitesse v paraît relativement basse lors du test 63 ($V \leq S2$), le RNC envoie un message « MEASUREMENT CONTROL » pour faire passer l'UE en mode de compte rendu périodique, mais avec une période de compte rendu plus longue que la période $T_p$ indiquée à l'étape 65.

Le test de l'étape 63 pourrait d'autre part porter de façon cumulative sur la vitesse v et sur le niveau de signal $CPICH\_RSCP_i$ de sorte que le mode sur événement ne soit maintenu que si v > S2 et $CPICH\_RSCP_i \geq S'1$, le seuil S'1 étant inférieur à S1. Ceci permet de passer en mode périodique lorsque la dégradation du $CPICH\_RSCP_i$; devient trop sévère.

Dans l'exemple de la figure 9, l'UE 14 est initialement en mode périodique, avec une période de compte rendu $T_p$ (étape 70). En conséquence, à chaque période $T_p$, l'UE envoie au RNC un message « MEASUREMENT REPORT » dans lequel il indique notamment les derniers paramètres $CPICH\_RSCP_i$ et v. Dans l'analyse de ces paramètres, faite à l'étape 72, le RNC examine si le niveau de signal $CPICH\_RSCP_i$ devient supérieur à un seuil S3. Dans l'affirmative, il n'adressera un message « MEASUREMENT CONTROL » à l'UE pour le faire passer en mode sur événement (étape 73) que si l'UE se déplace suffisamment lentement, ce qui est exprimé par la condition que la vitesse V soit inférieure à un seuil S4. Le message « MEASUREMENT CONTROL » envoyé à l'UE lorsque $CPICH\_RSCP_i$ > S3 et V < S4 fait passer l'UE en mode sur événement à l'étape 74, l'événement 1f étant par exemple surveillé dans la suite.

En variante, ce message « MEASUREMENT CONTROL » de l'étape 73 pourrait maintenir l'UE en mode de compte rendu périodique, mais avec une période allongée par rapport à la période $T_p$.

Dans un mode de réalisation encore affiné, la mise en oeuvre de l'invention conduit à privilégier le mode de compte rendu sur événement au détriment du mode périodique lorsque la vitesse de déplacement estimée de l'UE est relativement faible et que la variabilité du canal est relativement faible, c'est-à-dire lorsque le canal est relativement riche en multi-trajets. En effet, la dégradation d'un autre paramètre, par exemple le CPICH_RSCP ou le CPICH_Ec/N0, peut souvent être compensée par la richesse du canal en multi-trajets, qu'on peut évaluer à partir de l'information de variance remontée au RNC selon l'invention.

Plus généralement, on adoptera un mode de compte rendu donnant lieu à des messages plus fréquents ou plus probables quand la vitesse estimée de l'UE est relativement élevée et quand la variabilité du canal est grande (ou quand elle est en train d'augmenter) que quand elle est petite (ou quand elle est en train de diminuer). A l'intérieur du mode périodique (qui est parfois le seul implémenté), le RNC aura tendance à raccourcir les périodes spécifiées dans le message "MEASUREMENT CONTROL" ou "DEDICATED MEASUREMENT INITIATION REQUEST" lorsque la vitesse de l'UE est relativement élevée et que les variances mesurées sont grandes ou croissantes, et vice-versa. A l'intérieur du mode sur événement, il est aussi possible de modifier l'événement surveillé, et notamment la plage de valeurs spécifiée dans la définition de cet événement, afin qu'il devienne plus probable en présence de variances grandes ou croissantes.

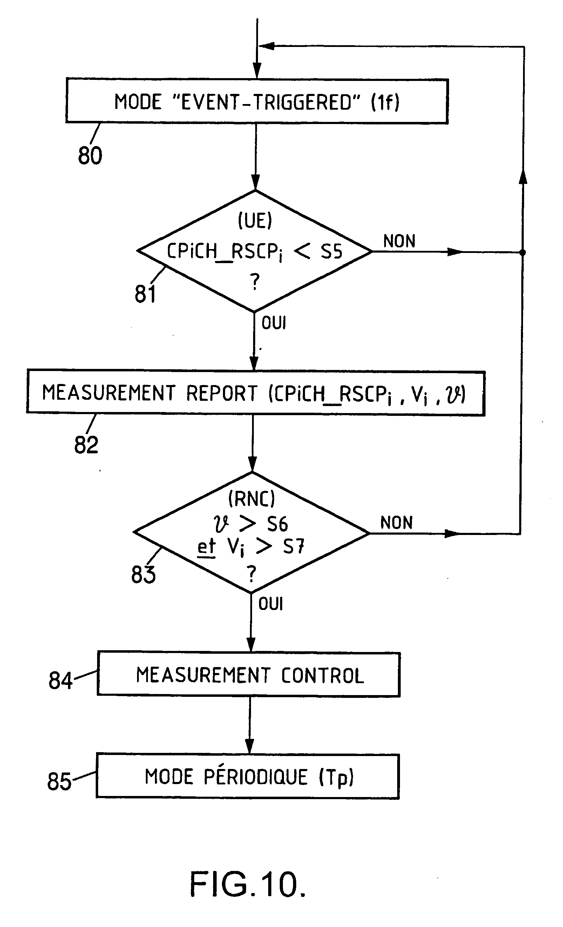

Dans l'exemple de la figure 10, le terminal est initialement en mode sur événement, et l'événement 1f de la norme lui a été spécifié (étape 80). En conséquence, l'UE surveille les mesures de niveau de puissance reçues de sa cellule de desserte i, par exemple le paramètre $CPICH\_RSCP_i$, en le comparant à un seuil S1 (étape 81). Tant que le niveau reste supérieur à ce seuil, l'UE reste en mode sur événement. Lorsque le niveau de puissance chute en dessous du seuil S5, l'UE adresse à son RNC un message « MEASUREMENT REPORT » précisant notamment les derniers

paramètres CPICH_RSCP$_i$, la vitesse estimée V et la variance normalisée V$_i$ (étape 82). Dans l'analyse de ces mesures, le RNC compare la vitesse V à un seuil S6 et la variance V$_i$ à un autre seuil S7 choisi inversement proportionnel à l'ordre de la diversité de trajet souhaitée dans la cellule i (étape 83). Si V ≤ S6 ou V$_i$ ≤ S7, le RNC considère respectivement que l'UE se déplace suffisamment lentement ou qu'on est en présence d'un canal relativement riche en multi trajets, de sorte qu'il maintient l'UE en mode de compte rendu sur événement, c'est-à-dire qu'il ne lui adresse pas de message « MEASUREMENT CONTROL ». En revanche, si $\tilde{V}$ > S6 et V$_i$ > S7 à l'étape 83, le RNC envoie à l'UE un message « MEASUREMENT CONTROL » à l'étape 84, afin que celui-ci passe en mode périodique à l'étape 85 avec une période de compte rendu Tp relativement courte.

De nombreuses variantes peuvent être adoptées à l'exemple de réalisation de la figure 10. Dans l'une d'elles, le test 83 ne consiste pas à comparer la variance normalisée V$_i$ à un seuil S7, mais à déterminer si cette variance reçue dans le dernier message « MEASUREMENT REPORT » est plus grande que celle reçue dans le message précédent pour le même UE et la même cellule. Le message « MEASUREMENT CONTROL » n'est alors envoyé à l'étape 84 que si la vitesse $\tilde{V}$ est suffisamment forte et si la variance V$_i$ est en train de croître.

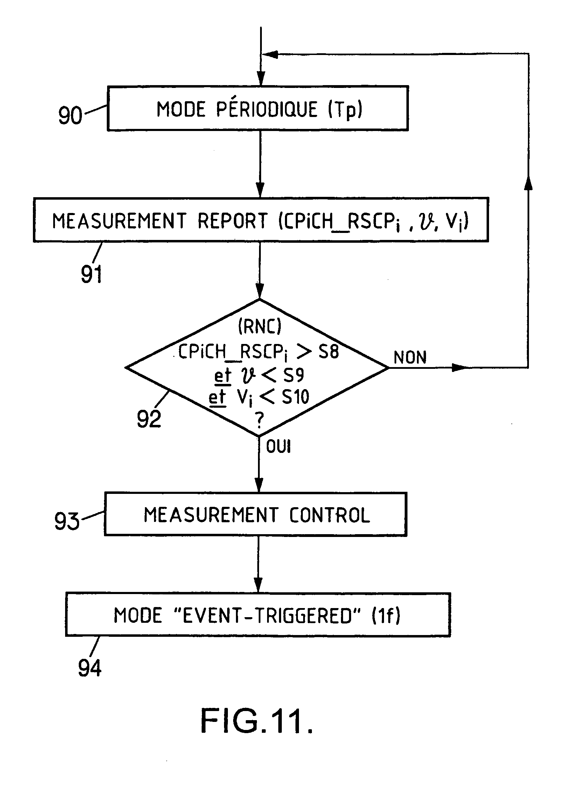

Dans l'exemple de la figure 11, l'UE 14 est initialement en mode périodique, avec une période de compte rendu Tp (étape 90). En conséquence, à chaque période Tp, l'UE envoie au RNC un message « MEASUREMENT REPORT » dans lequel il indique notamment les derniers paramètres CPICH_RSCP$_i$, V$_i$ et $\tilde{V}$. Dans l'analyse de ces paramètres, faite à l'étape 92, le RNC examine si le niveau de signal CPICH_RSCP$_i$ devient supérieur à un seuil S8. Dans l'affirmative, il n'adressera un message « MEASUREMENT CONTROL » à l'UE pour le faire passer en mode sur événement (étape 93) que si la vitesse estimée de l'UE est considérée comme lente, c'est-à-dire inférieure à un seuil S9 et si le canal entre l'UE et sa cellule de desserte est relativement riche en multi trajets, ce qui est exprimé par la condition que la variance V$_i$ soit inférieure à un seuil S10. Ce seuil S10 peut notamment être inversement proportionnel à un ordre de diversité correspondant à un ou deux trajets de propagation. En effet, lorsque le canal engendre peu de diversité, il peut être risqué de passer en mode sur événement, même si l'UE se déplace lentement et si le niveau reçu sur le CPICH paraît excellent (il risque d'en résulter une perte de communication si un obstacle fait soudain perdre le trajet de propagation dominant). Le message « MEASUREMENT CONTROL » envoyé à l'UE lorsque CPICH_RSCP$_i$ > S8, V < S9 et V$_i$ < S10 fait passer l'UE en mode sur événement à l'étape 94, l'événement 1f étant par exemple surveillé dans la suite.

En variante, ce message « MEASUREMENT CONTROL » de l'étape 93 pourrait maintenir l'UE en mode de compte rendu périodique, mais avec une période allongée par rapport à la période T$_p$.

Comme précédemment, l'exemple de la figure 11 peut comporter de multiples variantes. En particulier, le test de variance effectué à l'étape 92 peut porter sur la variation de la variance plutôt que sur sa valeur absolue, une variance croissante donnant lieu au maintien du mode périodique avec la période T$_p$.

Bien d'autres variantes encore peuvent être mises en oeuvre dans le contexte de l'invention pour permettre une transition, ou au contraire un maintien, dans un mode donné de transmission des mesures (mode sur événement ou mode périodique), selon la vitesse estimée V de l'UE éventuellement en combinaison avec la variance V$_i$ ou l'évolution de cette variance dans le temps.

En particulier, lorsque l'UE considéré est en situation de macrodiversité, c'est-à-dire en communication simultanée avec plusieurs nodes B, les transitions entre les modes de remontée de mesures peuvent prendre en compte les mesures respectives sur les canaux correspondants pour chaque lien radio associé. A titre d'exemple, on pourra passer du mode de transmission sur événement au mode périodique si la quantité CPICH_RSPC$_i$ est inférieure à un seuil pour au moins un des liens radio entre l'UE et un node B de l'ensemble actif et si la vitesse estimée de l'UE est supérieure à un seuil. Inversement, on pourra passer du mode de transmission périodique au mode sur événement si la quantité CPICH_RSPC$_i$ est supérieure à un seuil pour au moins un des liens radio entre l'UE et un node B de l'ensemble actif et si la vitesse estimée de l'UE est inférieure à un seuil.

Dans le cas où l'UE est en communication avec certains nodes B, selon un service de communication donné (communication vocale, transmission de données, etc.), la détermination du mode de compte rendu peut également prendre en compte le service en question. A titre d'exemple, si une communication vocale est en cours entre l'UE et au moins un node B, on peut favoriser le passage ou le maintien en mode de transmission périodique, de façon plus sensible que dans le cas d'une transmission de données. La communication vocale est en effet plus sensible aux dégradations des conditions radio et nécessite donc une observation plus fréquente de ces conditions.

A cet effet, on peut choisir des seuils plus sévères pour les différents paramètres estimés lorsque le service supporte mal les dégradations radio. Par exemple, dans l'exemple illustré à la figure 10, on peut choisir un seuil S5 plus élevé pour un service voix que pour un service de données, de manière à favoriser le passage du mode sur événement au mode périodique lorsque les conditions radio se dégradent. De même, on peut utiliser des seuils de vitesse S6 et de variabilité temporelle S7 plus faibles pour un service voix que pour un service de données. On favorise ainsi le passage du mode sur événement au mode périodique, en considérant de façon plus précoce que la vitesse de l'UE est élevée et/ou que la variabilité temporelle est élevée.

Dans une autre réalisation de l'invention, le contrôle du mode de compte rendu par le RNC, tenant compte des informations sur la vitesse de déplacement du terminal mobile, consiste en l'ajout ou la suppression de paramètres devant faire l'objet de comptes rendus de mesures de la part de l'UE ou du node B. Ceci permet par exemple d'adopter des critères différenciés pour faire entrer ou sortir des cellules de l'ensemble actif, qui sont fondés sur des mesures de paramètres différents selon que la vitesse estimée est grande ou petite.

**Revendications**

**1.** Procédé de contrôle d'un mode de compte rendu de mesures faites sur une interface radio entre un terminal mobile (14,14a, 14b) et une infrastructure de réseau radio cellulaire l'infrastructure comprenant au moins un contrôleur de réseau radio (12) et des émetteurs-recepteurs fixes (13), le procédé comprenant les étapes suivantes :

- mesurer des paramètres de propagation radio entre le terminal mobile et au moins un des émetteurs-récepteurs fixes;
- transmettre au contrôleur de réseau radio des messages de compte rendu indiquant au moins une partie des paramètres mesurés, conformément à un mode de compte rendu spécifié par le contrôleur de réseau radio;
- obtenir une estimation de vitesse de déplacement du terminal mobile au contrôleur de réseau radio; et
- traiter les messages de compte rendu au contrôleur de réseau radio. pour déterminer, en tenant compte de ladite estimation de vitesse, un mode de compte rendu à spécifier pour une partie au moins des messages de compte rendu

le procédé étant **caractérisé en ce que** la détermination du mode de compte rendu comprend la sélection entre une transmission périodique des messages de compte rendu et une transmission des messages de compte rendu sur détection d'événement.

**2.** Procédé selon la revendication 1, dans lequel l'estimation de vitesse est calculée à partir des paramètres de propagation radio mesurés, et incluse dans un message de compte rendu pour être obtenus au contrôleur de réseau radio (12).

**3.** Procédé selon la revendication 1, dans lequel on privilégie la transmission périodique des messages de compte rendu par rapport a la transmission des messages de compte rendu sur détection d'événement lorsque l'estimation de la vitesse de déplacement du terminal mobile (14, 14a, 14b) est supérieure a un seuil.

**4.** Procédé selon l'une quelconque des revendications précédentes, dans lequel la détermination du mode de compte rendu comprend, dans le cas d'une transmission périodique des messages de compte rendu, la sélection de la période de transmission desdits messages,

**5.** Procédé selon la revendication 4, dans lequel la période de transmission sélectionnée est une fonction décroissante de l'estimation de la vitesse de déplacement du terminal mobile (14, 14a, 14b).

**6.** Procédé selon l'une quelconque des revendications précédentes, dans lequel la détermination du mode de compte rendu comprend, dans le cas d'une transmission des messages de compte rendu sur détection d'événement, la sélection de l'événement dont la détection donne lieu à la transmission d'un desdits messages.

**7.** Procédé selon la revendication 6, dans lequel l'événement sélectionné a une probabilité d'occurrence qui est une fonction croissante de l'estimation de la vitesse de déplacement du terminal mobile (14, 14a, 14b).

**8.** Procédé selon l'une quelconque des revendications précédentes, dans lequel certains au moins des paramètres mesurés indiqués dans les messages de compte rendu pour au moins un émetteur-récepteur fixe (13) comprennent des données représentatives d'une variabilité temporelle d'un niveau énergétique reçu sur le canal entre le terminal mobile (14, 14a, 14b) et ledit émetteur-récepteur fixe.

**9.** Procédé selon la revendication 8, dans lequel le traitement des messages de compte rendu pour déterminer le mode de compte rendu tient en outre compte desdites données représentatives de la variability temporelle.

**10.** Procédé selon chacune des revendications 1 et 9, dans lequel on privilégie la transmission périodique des messages de compte rendu par rapport à la transmission des messages de compte rendu sur détection d'événement lorsque la variabilité temporelle du niveau énergétique est supérieure à un seuil.

**11.** Procédé selon chacune des revendications 1 et 9, dans lequel on privilégie la transmission périodique des messages de compte rendu par rapport à la transmission des messages de compte rendu sur détection d'événement lorsque la variabilité temporelle du niveau énergétique est croissante.

**12.** Procédé selon chacune des revendications 4 et 9, dans lequel la période de transmission sélectionnée est une fonction décroissante de la variabilité temporelle du niveau énergétique.

**13.** Procédé selon chacune des revendications 6 et 9, dans lequel l'événement sélectionné a une probabilité d'occurrence qui est une fonction croissante de la variabilité temporelle du niveau énergétique.

**14.** Procédé selon l'une quelconque des revendications précédentes, dans lequel la mesure des paramètres de propagation radio est au moins en partie effectuée dans le terminal mobile, les messages de compte rendu comprenant des messages montants émis par le terminal mobile (14, 14a, 14b) vers l'infrastructure du réseau.

**15.** Procédé selon l'une quelconque, des revendications précédentes, dans lequel la mesure des paramètres de propagation radio est au moins en partie effectués dans un des émetteurs-récepteurs fixes (13), les messages de compte rendu comprenant des messages émis par ledit émetteur-récepteur fixe vers le contrôleur de réseau radio.

**16.** Procédé selon l'une quelconque des revendications précédentes, dans lequel le traitement des messages de compte rendu pour déterminer le mode de compte rendu tient en outre compte d'un service dans le cadre duquel s'inscrit une communication entre le terminal mobile et au moins un desdits émetteurs-récepteurs fixes.

**17.** Contrôleur de réseau radio (12) pour une infrastructure de réseau radio cellulaire, comprenant des moyens de réception de messages de compte rendu indiquant des paramètres de propagation radio mesurés entre un terminal mobile (14,14a, 14b) et au moins un émetteur-récepteur fixe (13) de l'infrastructure, et des moyens de traitement des messages de compte rendu pour contrôler un mode de transmission d'une partie au moins desdits messages conformément à un procédé selon l'une quelconque des revendications précédentes.

**Claims**

**1.** A method for controlling a measurement reporting mode conducted on a radio interface between a mobile terminal (14, 14a, 14b) and a cellular radio network infrastructure, the infrastructure comprising at least one radio network controller (12) and fixed transmitter-receivers (13), which method comprises the following steps:

- measuring radio propagation parameters between the mobile terminal and at least one of the fixed transmitters-receivers;
- transmitting to the radio network controller reporting messages indicating at least some of the measured parameters, in accordance with a reporting mode specified by the radio network controller,
- obtaining an estimate of the mobile terminal's movement speed from the radio network controller; and
- processing the reporting messages to the radio network controller in order to determine, taking into account said speed estimate, a reporting method to be specified for at least some of the reporting messages, which method is **characterized in that** the determination of the reporting method comprises selecting between transmitting reporting messages periodically and transmitting reporting messages whenever an event is detected.

**2.** A method according to claim 1, in which the speed estimate is calculated based on the measured radio propagation parameters, and included in a reporting message in order to be obtained from the radio network controller (12).

**3.** A method according to claim 1, wherein transmitting reporting messages periodically is preferred over transmitting reporting messages whenever an event is detected, when the estimate of the mobile terminal's (14, 14a, 14b) movement speed is greater than a threshold.

**4.** A method according to any one of the previous claims, wherein the determination of the reporting mode, if transmitting reporting messages periodically, comprises selecting the transmission period of said messages.

**5.** A method according to claim 4, wherein the selected transmission period is a decreasing function of the estimate of the mobile terminal's (14, 14a, 14b) movement speed.

**6.** A method according to any one of the previous claims, wherein the determination of the reporting mode, if transmitting reporting messages whenever an event is detected, comprises selecting the event whose detection results in the transmission of said messages.

**7.** A method according to claim 6, wherein the selected event has a likelihood of occurrence which is an increasing function of the estimate of the mobile terminal's (14, 14a, 14b) movement speed.

**8.** A method according to any one of the previous claims, wherein at least some of the measured parameters indicated in the reporting messages for at least one fixed transmitter-receiver (13) comprise data representative of a temporal variability of an energy level received on the channel between the mobile terminal (14, 14a, 14b) and said fixed transmitter-receiver.

**9.** A method according to claim 8, wherein the processing of reporting messages to determine the reporting mode further takes into account said data representative of the temporal variability.

**10.** A method according to each of the claims 1 and 9, wherein transmitting reporting messages periodically is preferred over transmitting reporting messages whenever an event is detected, when the temporal variability of the energy level is greater than a threshold.

**11.** A method according to each of the claims 1 and 9, wherein transmitting reporting messages periodically is preferred over transmitting reporting messages whenever an event is detected, when the temporal variability of the energy level is increasing.

**12.** A method according to each of the claims 4 and 9, wherein the selected transmission period is a decreasing function of the temporal variability of the energy level.

**13.** A method according to each of the claims 6 and 9, wherein the selected event has a likelihood of occurrence which is an increasing function of the temporal variability of the energy level.

**14.** A method according to any one of the preceding claims, wherein the measurement of the radio propagation parameters is at least partially carried out within the mobile terminal, the reporting messages comprising upstream messages sent by the mobile terminal (14, 14a, 14b) to the network infrastructure.

**15.** A method according to any one of the preceding claims, wherein the measurement of the radio propagation parameters is at least partially carried out within the fixed transmitter-receivers (13), the reporting messages comprising messages sent by said fixed transmitter-receiver to the radio network controller.
**Subsidiary application**

**16.** A method according to any one of the preceding claims, wherein the processing of reporting messages to determine the reporting mode further takes into account a service whereby communication is recorded between the mobile terminal and at least one of the fixed transmitter-receivers.

**17.** A radio network controller (12) for a cellular radio network infrastructure, comprising means for receiving reporting messages indicating radio propagation parameters measured between a mobile terminal (14, 14e, 14b) and at least one fixed transmitter-receiver (13) of the infrastructure, and means for processing the reporting messages in order to control a mode for transmitting at least some of said messages in accordance with a method according to any one of the preceding claims.

**Patentansprüche**

**1.** Verfahren zur Steuerung eines Berichtsmodus für Messungen, die an einer Funkschnittstelle zwischen einem Mobilendgerät (14, 14a, 14b) und einer Infrastruktur eines zellularen Funknetzwerks durchgeführt wurden, wobei die Infrastruktur mindestens eine Funknetzwerk-Steuerungseinrichtung (12) und ortsfeste Sender-Empfänger (13) umfasst, wobei das Verfahren die folgenden Schritte umfasst:

- Messen der Parameter der Funkausbreitung zwischen dem Mobilendgerät und mindestens einem der ortsfesten Sender-Empfänger;

- Übertragen der Berichtsnachrichten, welche mindestens einen Teil der gemessenen Parameter angeben, gemäß einem von der Funknetzwerk-Steuerungseinrichtung spezifizierten Berichtsmodus an die Funknetzwerk-Steuerungseinrichtung;
- Erhalten einer Schätzung der Bewegungsgeschwindigkeit des Mobilendgeräts an der Funknetzwerk-Steuerungseinrichtung; und
- Verarbeiten der Berichtsnachrichten an der Funknetzwerk-Steuerungseinrichtung, um unter Berücksichtigung der besagten Schätzung der Geschwindigkeit einen für zumindest einen Teil der Berichtsnachrichten zu spezifizierenden Berichtsmodus zu bestimmen, wobei das Verfahren **dadurch gekennzeichnet ist, dass** die Bestimmung des Berichtsmodus die Auswahl zwischen einer periodischen Übertragung der Berichtsnachrichten und einer Übertragung der Berichtsnachrichten bei Erkennen eines Ereignisses umfasst.

2. Verfahren nach Anspruch 1, wobei die Schätzung der Geschwindigkeit auf der Grundlage der gemessenen Funkausbreitungsparameter berechnet und in eine für den Empfang an der Funknetzwerk-Steuerungseinrichtung (12) bestimmte Berichtsnachricht eingefügt wird.

3. Verfahren nach Anspruch 1, wobei man die periodische Übertragung der Berichtsnachrichten gegenüber der Übertragung der Berichtsnachrichten bei Erkennen eines Ereignisses bevorzugt, wenn die Schätzung der Geschwindigkeit der Bewegung des Mobilendgeräts (14, 14a, 14b) einen Grenzwert überschreitet.

4. Verfahren nach einem beliebigen der vorstehenden Ansprüche, wobei die Bestimmung des Berichtsmodus im Fall einer periodischen Übertragung der Berichtsnachrichten die Auswahl der Übertragungsperiode der besagten Nachrichten umfasst.

5. Verfahren nach Anspruch 4, wobei die ausgewählte Übertragungsperiode eine fallende Funktion der Schätzung der Geschwindigkeit der Bewegung des Mobilendgeräts (14, 14a, 14b) ist.

6. Verfahren nach einem beliebigen der vorstehenden Ansprüche, wobei die Bestimmung des Berichtsmodus im Fall einer Übertragung der Berichtsnachrichten bei Erkennen eines Ereignisses die Auswahl des Ereignisses, dessen Erkennen die Übertragung einer der besagten Nachrichten auslöst, umfasst.

7. Verfahren nach Anspruch 6, wobei die Wahrscheinlichkeit des Auftretens des ausgewählten Ereignisses eine steigende Funktion der Schätzung der Bewegungsgeschwindigkeit des Mobilendgeräts (14, 14a, 14b) ist.

8. Verfahren nach einem beliebigen der vorstehenden Ansprüche, wobei zumindest einige der in den Berichtsnachrichten angegebenen gemessenen Parameter für mindestens einen ortsfesten Sender-Empfänger (13) Daten umfassen, welche für eine zeitliche Veränderlichkeit eines auf dem Kanal zwischen dem Mobilendgerät (14, 14a, 14b) und dem besagten ortsfesten Sender-Empfänger erhaltenen Energieniveaus repräsentativ sind.

9. Verfahren nach Anspruch 8, wobei die Verarbeitung der Berichtsnachrichten zum Bestimmen des Berichtsmodus weiterhin die besagten für die zeitliche Veränderlichkeit repräsentativen Daten berücksichtigt.

10. Verfahren nach einem jeden der Ansprüche 1 und 9, wobei man die periodische Übertragung der Berichtsnachrichten gegenüber der Übertragung der Berichtsnachrichten bei Erkennen eines Ereignisses bevorzugt, wenn die zeitliche Veränderlichkeit des Energieniveaus einen Grenzwert überschreitet.

11. Verfahren nach einem jeden der Ansprüche 1 und 9, wobei man die periodische Übertragung der Berichtsnachrichten gegenüber der Übertragung der Berichtsnachrichten bei Erkennen eines Ereignisses bevorzugt, wenn die zeitliche Veränderlichkeit des Energieniveaus steigend ist.

12. Verfahren nach einem jeden der Ansprüche 4 und 9, wobei die ausgewählte Übertragungsperiode eine fallende Funktion der zeitlichen Veränderlichkeit des Energieniveaus ist.

13. Verfahren nach einem jeden der Ansprüche 6 und 9, wobei die Wahrscheinlichkeit des Auftretens des ausgewählten Ereignisses eine steigende Funktion der zeitlichen Veränderlichkeit des Energieniveaus ist.

14. Verfahren nach einem beliebigen der vorstehenden Ansprüche, wobei die Messung der Funkausbreitungsparameter zumindest teilweise im Mobilendgerät ausgeführt wird, wobei die Berichtsnachrichten Uplink-Nachrichten umfassen, welche von dem Mobilendgerät (14, 14a, 14b) an die Infrastruktur des Netzwerks gesendet werden.

15. Verfahren nach einem beliebigen der vorstehenden Ansprüche, wobei die Messung der Funkausbreitungsparameter zumindest teilweise in einem der ortsfesten Sender-Empfänger (13) ausgeführt wird, wobei die Berichtsnachrichten von dem besagten ortsfesten Sender-Empfänger an die Funknetzwerk-Steuerungseinrichtung gesendete Nachrichten umfassen.

16. Verfahren nach einem beliebigen der vorstehenden Ansprüche, wobei die Verarbeitung der Berichtsnachrichten zum Bestimmen des Berichtsmodus weiterhin den Dienst, für welchen eine Verbindung zwischen dem Mobilendgerät und mindestens einem der besagten ortsfesten Sender-Empfänger aufgebaut wurde, berücksichtigt.

17. Funknetzwerk-Steuerungseinrichtung (12) für die Infrastruktur eines zellularen Funknetzwerks, umfassend: Mittel zum Empfangen von Berichtsnachrichten, welche Parameter der zwischen einem Mobilendgerät (14, 14a, 14b) und mindestens einem ortsfesten Sender-Empfänger (13) gemessenen Funkausbreitung angeben, und Mittel zum Verarbeiten der Berichtsnachrichten, um einen Übertragungsmodus mindestens eines Teils der besagten Nachrichten gemäß einem Verfahren nach einem beliebigen der vorstehenden Ansprüche zu steuern.

FIG.1.

RÉSEAU FIXE

COMMUTATEUR UMTS

COMMUTATEUR UMTS

Iu  Iu  Iur  Iur  Iu

RNC  RNC  RNC

Iub  Iub  Iub

NODE B  NODE B  NODE B  NODE B  NODE B  NODE B  NODE B  NODE B

EP 1 450 573 B1

FIG.2.

FIG.3.

FIG.4.

## FIG.5.

EP 1 450 573 B1

FIG.6.

FIG.7.

MODE "EVENT-TRIGGERED" (1f)

60

(UE)
$CPiCH\_RSCP_i < S1$
?

61

NON

OUI

MEASUREMENT REPORT ($CPiCH\_RSCP_i$, $\mathcal{V}$)

62

(RNC)
$\mathcal{V} > S2$
?

63

NON

OUI

64 — MEASUREMENT CONTROL

65 — MODE PÉRIODIQUE (Tp)

FIG.8.

70 ── MODE PÉRIODIQUE (Tp)

MEASUREMENT REPORT (CPiCH_RSCP$_i$ , $\mathcal{V}$)

71

(RNC)
CPiCH_RSCP$_i$ > S3
et $\mathcal{V}$ < S4
?

72

NON

OUI

73 ── MEASUREMENT CONTROL

MODE "EVENT-TRIGGERED" (1f)

74

# FIG.9.

MODE "EVENT-TRIGGERED" (1f)

80

(UE)
CPiCH_RSCP$_i$ < S5
?

81

NON

OUI

MEASUREMENT REPORT (CPiCH_RSCP$_i$ , V$_i$ , $\mathcal{V}$)

82

(RNC)
$\mathcal{V}$ > S6
<u>et</u> V$_i$ > S7
?

83

NON

OUI

MEASUREMENT CONTROL

84

MODE PÉRIODIQUE (Tp)

85

FIG.10.

```
      ┌─────────────────────────────────────┐
 90 ──│      MODE PÉRIODIQUE (Tp)            │
      └─────────────────────────────────────┘
                        │
      ┌─────────────────────────────────────────────┐
      │ MEASUREMENT REPORT (CPiCH_RSCP$_i$ , $\mathcal{V}$, V$_i$) │
      └─────────────────────────────────────────────┘
          91          │
                  ╱─────────────╲
                 ╱    (RNC)      ╲
                ╱ CPiCH_RSCP$_i$ > S8 ╲        NON
               ╱   et $\mathcal{V}$ < S9  ╲──────────→
               ╲   et V$_i$ < S10   ╱
            92  ╲      ?      ╱
                 ╲───────────╱
                      │ OUI
      ┌─────────────────────────────────────┐
 93 ──│      MEASUREMENT CONTROL             │
      └─────────────────────────────────────┘
                      │
      ┌─────────────────────────────────────┐
      │   MODE "EVENT-TRIGGERED" (1f)        │
      └─────────────────────────────────────┘
          94
```

# FIG.11.

EP 1 450 573 B1

## RÉFÉRENCES CITÉES DANS LA DESCRIPTION

**Documents brevets cités dans la description**

- WO 9943178 A
- WO 0163960 A

- WO 0141382 A